# EUROPEAN PATENT SPECIFICATION

(11) **EP 3 379 983 B1**
(45) Date of publication and mention of the grant of the patent: **11.09.2019**
(21) Application number: 16823329.4
(22) Date of filing: 23.11.2016
(51) Int. Cl.: A47J 31/54

(54) **UNIT FOR DISPENSING HOT BEVERAGES, PARTICULARLY FOR ESPRESSO COFFEE, AND COFFEE MACHINE COMPRISING SAID DISPENSING UNIT**
EINHEIT ZUR AUSGABE VON HEISSGETRÄNKEN, INSBESONDERE FÜR ESPRESSO, UND KAFFEEMASCHINE MIT BESAGTER AUSGABEEINHEIT
UNITÉ DE DISTRIBUTION DE BOISSONS CHAUDES, EN PARTICULIER POUR CAFÉ EXPRESSO ET MACHINE À CAFÉ COMPRENANT LADITE UNITÉ DE DISTRIBUTION

(30) Priority: 26.11.2015 IT UB20155938
(43) Date of publication of application: 03.10.2018
(73) Proprietor: Vibiemme S.r.l., 20092 Cinisello Balsamo (MI) (IT)
(72) Inventor: OSNATO, Cristiano, 20835 Muggio' (MB) (IT)
(74) Representative: Bonini, Ercole
(86) International application number: PCT/IB2016/057063
(87) International publication number: WO 2017/089970

(56) References cited:
- DE-U1-202011 050 945
- FR-A- 1 130 580
- US-A- 1 631 753

## Description

The present invention regards a unit for dispensing hot beverages, particularly but not exclusively for dispensing espresso coffee.

As known, there are various types of coffee machines available in the market. In particular, among the main professional coffee machines there are the following systems for dispensing the water, required for brewing espresso coffee, i.e.:
1) the thermosyphon circulation system;
2) the system regarding the saturated brew groups technology.

In the first of the two systems mentioned above, the dispensing water is heated and kept in circulation both due to the transfer of heat, which occurs through heat exchangers arranged in the service boiler and the water pressure of the water supply system. This circulation effect maintains the system's temperature required for dispensing espresso coffee.

On the one hand, whereas such thermosyphon circulation system enables using water from the water supply system for dispensing espresso coffee as well as for continuously dispensing coffee at a constant pressure of 9 bars, on the other hand it reveals the following drawbacks:
- interdependence between the service boiler dispensing circuits;
- difficulty to control the coffee beverage dispensing temperature;
- considerable energy consumption.

From now henceforth, the expression "dispensing water" shall be used to indicate the water that is dispensed by the coffee machine and that is dispensed into a coffee cup after being suitably mixed with the coffee powder contained in the filter holder.

The second system provides for the presence of two boilers: one for dispensing the coffee beverage and the other for the service boiler.

Such system provides for that the water for dispensing the coffee beverage be heated and directly drawn by a saturated brew boiler directly connected to the coffee dispensing unit, instead of from the water supply system. The espresso coffee dispensing unit is maintained at the required temperature by the transfer of heat that occurs between the boiler and the dispensing unit.

From now henceforth, the expression "dispensing unit" will be used to indicate an assembly of components comprising a boiler provided with heating elements and a filter holder unit containing the coffee powder, through which there is dispensed a given amount of coffee beverage enough to fill a cup. Whereas such second dispensing system on the one hand enables fairly precisely controlling the coffee beverage dispensing temperature and ensures that the water dispensing temperature no longer depends on the boiler pressure, on the other hand it reveals the drawback of using impure water (stagnant) for dispensing the coffee. Actually, in this case the dispensing water is not directly drawn from the water supply system but from a saturated brew boiler.

The saturated brew groups technology then developed from a dual boiler system to a multiboiler system in which there is a boiler for each dispensing unit and a boiler for the service boiler.

Whereas the multiboiler system on the one hand enables good control of the temperature of the dispensing water (and thus the coffee) for each dispensing unit, on the other hand it reveals the following drawbacks:
- interdependence of the coffee beverage water dispensing circuit with respect to the service boiler water circuit; in this case, the thermal stability of the system is bound to the operation of the service boiler;
- lack of actual reduction of energy consumption, due to the fact that the overall efficiency of the system requires the operation of both the coffee beverage water dispensing circuit and the boiler water circuit.

Patent document DE 20 2011 050945 U1 illustrates a unit for dispensing hot beverages, particularly for espresso coffee, comprising:
- a main body with at least one filter holder unit;
- a boiler connected to the main body;
- a first circuit, inside the boiler, for heating the water present therein;
- a second circuit, independent from the first circuit, for conveying the dispensing water towards the filter holder unit.

Patent document US 1 631 753 A illustrates an electrical water heater, comprising a plurality of ducts spiral-wound and coaxial with respect to each other.

The aim of the present invention is to overcome the aforementioned drawbacks.

In particular, an object of the present invention is to provide a hot beverage dispensing unit having a system for a more accurate control of the water temperature during dispensing and that enables a more constant water dispensing temperature with respect to systems of the known type.

A further object of the present invention is to provide a unit for dispensing hot beverages, particularly espresso coffee, capable of reducing the times required to reduce the dispensing temperature during the time that elapses between the just terminated dispensing of a cup of coffee and the immediately subsequent dispensing.

The aforementioned objects are attained by the present invention regarding a dispensing unit whose main characteristics are outlined by claim one.

The aforementioned objects are also attained by an espresso coffee machine whose main characteristics are outlined by claim twelve.

Further detailed characteristics of the invention are outlined in the dependent claims.

Advantageously, the dispensing unit according to the invention does not provide for any direct contact between the dispensing water and the heating elements of the service boiler.

Still advantageously, the dispensing unit according to the invention provides for the instantaneous heating of the amount of dispensing water required to obtain the espresso coffee beverage conferring greater consistency to the coffee dispensed into a cup.

Still advantageously, the dispensing unit according to the invention provides for a water dispensing circuit in which there is no direct contact between the dispensing circuit and the thermosyphon circuit, i.e. they are entirely independent with respect to each other. Thus, the dispensing water has no direct contact with the heating element (resistor) belonging to the thermosyphon circuit.

Still advantageously, the coffee machine according to the invention provides for a water dispensing circuit that can be entirely made using material suitable for handling food products.

The aforementioned objects and advantages shall be more apparent from the description of a preferred embodiment of the invention, outlined hereinafter by way of non-limiting example, with reference to the attached drawings, wherein:
- fig. 1 represents a plan view of the dispensing unit according to the invention;
- fig. 2 represents a sectional view of fig. 1 along line A-A;
- fig. 3 represents a further sectional view of fig. 1 along line E-E;
- fig. 4 represents a further sectional view of fig. 1 along line C-C;
- fig. 5 represents a further sectional view of fig. 1 along line D-D;
- fig. 6 represents a further sectional view of fig. 1 along line B-B;
- fig. 7 represents a further sectional view of fig. 1 along line F-F;
- figs. 8 and 9 respectively represent the axonometric view and the sectional view of a detail of a cartridge visible in fig. 2;
- fig. 10 represents an enlarged view of the detail of fig. 2 indicated with K;
- figs. 11 and 12 respectively represent two sectional views of an insert for adjusting the air/water mixture shown in two different operating configurations, which is inserted into area K of fig. 2;
- fig. 13 represents an axonometric view showing - in detail - the connection of the channels for the flow of the dispensing water visible separately in figs. 2, 4, 7 and 10.

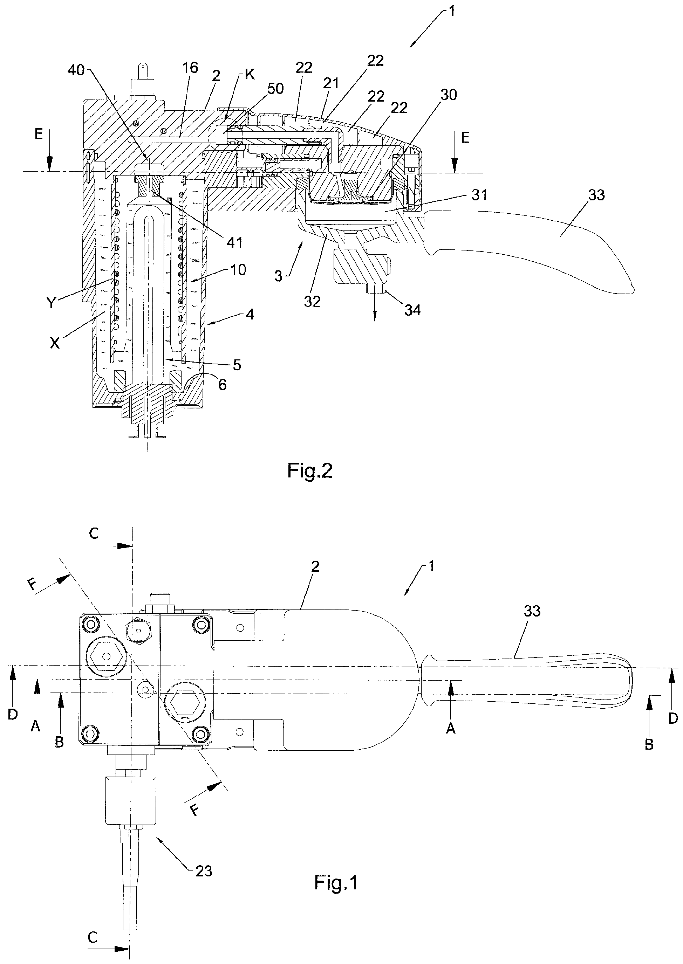

With reference to figs. 1 and 2, there is observed a dispensing unit, generally indicated with **1**, comprising a main body **2** provided with a coffee filter holder unit **3** removably constrained to the main body **2.**

With reference to fig. 2, it is observed that the dispensing unit **1** comprises a boiler **4** mechanically connected to the main body **2** and provided with one or more heating elements **5** constrained to the bottom **6** thereof and suitable to heat the water contained therein.

In particular, in the present embodiment, the water **X** contained in the boiler **4** is heated by a resistor **5** and it constitutes the water of the boiler of the thermosyphon circulation circuit.

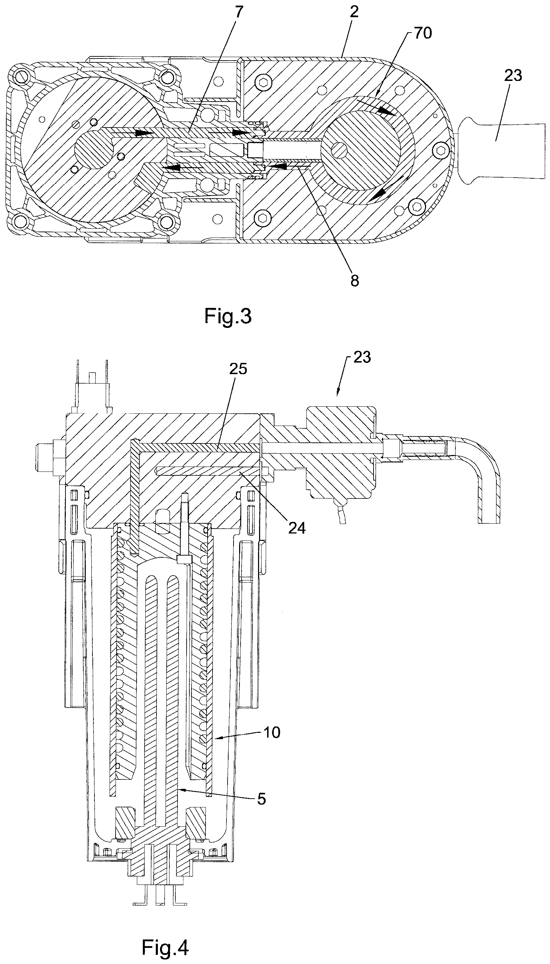

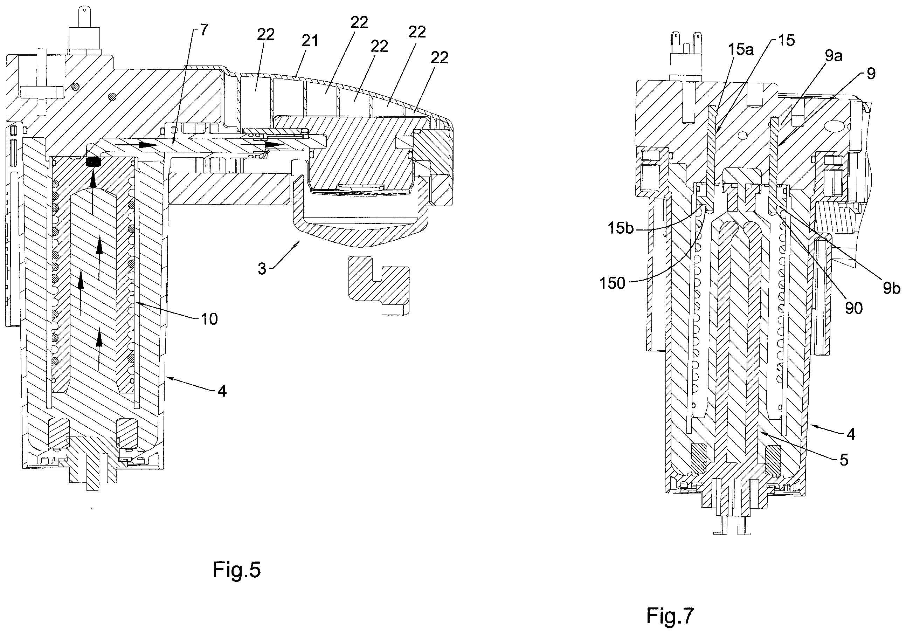

Once heated, the water **X** is conveyed upwards up to reaching a first thermosyphon duct **7**, visible in figs. 3 and 5, which conveys the thermosyphon circulation water **X** towards the filter holder unit **3**, and in particular towards the area of the coffee filter.

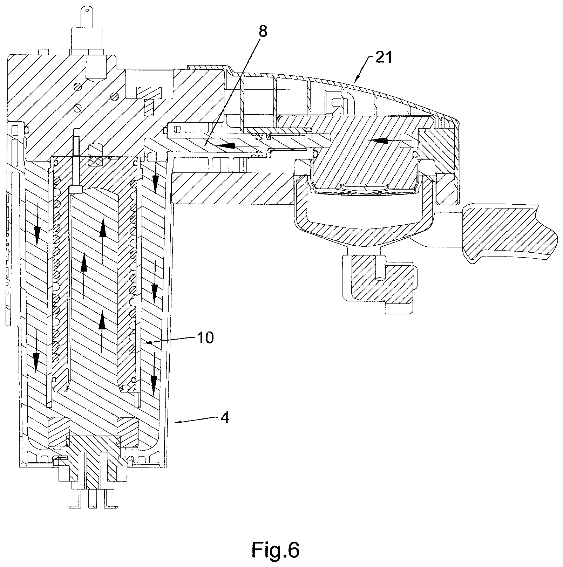

Following a path **70** of the annular type, as observable in fig. 3, the water then returns with a temperature lower than the heating one along a second thermosyphon duct **8**, visible in figs. 3 and 6, until it flows into the boiler **4** again.

Basically, there is a first circuit of the self-supporting thermosyphon type in which there occurs a convective circulation of the water **X** due to the sole difference of density between water volumes at different temperatures.

With particular reference to figs. 4 and 7, there is also identified a second circuit for dispensing water **Y** into the cup of coffee, which directly draws water **Y** coming from the water supply system at about 15-20°C through a first inlet duct **9** and conveys it towards the filter holder unit **3** through a second outlet duct **15** and a solenoid valve **23**. The operation of such second dispensing circuit will be explained further in detail hereinafter.

According to the present invention and with reference to figs. 2, 4, 5, 6 and 7, the dispensing unit **1** comprises a cartridge **10** submerged in the water **X** contained in the boiler **4** and belonging to the second circuit for dispensing water **Y**.

As observable in fig. 7, the cartridge **10** is connected:
- to the first inlet duct **9** which conveys the water **Y** from the water supply system;
- to the second duct **15** for the outflow of water **Y**.

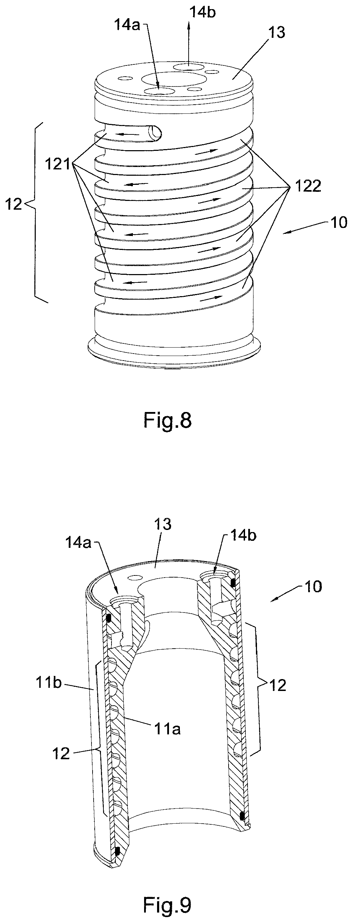

The cartridge **10**, visible with greater detail in figs. 8 and 9, is constituted by a first component **11a**, which is preferably made of a copper alloy compatible with the food production industry, and a second tubular component **11b** preferably made of stainless steel.

Such first component **11a** is preferably obtained using the CNC technology and on the outer section thereof there is obtained a helical channel **12**.

Still with reference to fig. 8, the helical channel **12** is a double-helix channel in which the helices **121** and **122** extend parallel to each other.

On the upper surface **13** of the cartridge **10** there are obtained two mutually spaced holes in which there are identified:
- an inlet hole **14a** connected to the helix **121**;
- an outlet hole **14b** connected to the helix **122**.

Such holes **14a**, **14b** respectively constitute the beginning and the end of the double-helix channel **12** and they are obtained in a manner such that the channel **12** begins and ends on the same side as the cartridge **10**.

Advantageously, in the double-helix channel **12** the fluid, water in this case, that traverses the helix **121** flows against the current with respect to the fluid that traverses the other helix **122**.

Still advantageously, such helical path of the fluid obtains a heat exchange which occurs against current and it is thus more efficient than a heat exchange that occurs with the fluid that flows according to a single flow direction. Thus, the temperature of the water **Y** is raised to the temperature selected as a function of the coffee blend to be transformed.

Advantageously, the aforementioned second tubular component **11b** is sealingly splined on the first component **11a** and serves as a jacket for the cartridge **10** so as to define, coupled with the first element **11a**, the aforementioned helical channel **12** (which is an airtight sealed channel).

With reference to fig. 9 it is observed that, while the element **11a** made of copper alloy is an optimal heat conductor (and thus transfers heat from the delivery water **X** of the thermosyphon circuit to the water **Y** of the dispensing circuit), the element **11b**, being made of stainless steel, is a material with low heat conductivity and thus serves as an insulator.

Advantageously, the fact that the element **11b** is an airtight insulator enables insulating the first thermosyphon circuit of the dispensing unit **1** against the second circuit for dispensing water **Y**, which also includes the cartridge **10**.

Still advantageously, the combination of the aforementioned two materials, i.e. copper as the inner component of the cartridge **10** and the stainless steel as the outer component thereof, generates a temperature differential which maintains the temperature of the first thermosyphon circuit constant.

With reference to fig. 2, over the electrical resistor 5 there was positioned a first insert **40** provided with a calibrated hole **41**.

Advantageously, such calibrated hole **41**, also directly obtainable in the cartridge **10**, constitutes a constriction and thus an obstacle to the outflow of water **X** heating the thermosyphon circuit, so as to increase the pressure thereof and create a turbulent flow of water **X**.

The pressure differential generated by the calibrated hole **41**, still advantageously, triggers the circulation of water in the thermosyphon circuit, visible in fig. 3, and enables maintaining the thermosyphon circuit water at the required temperature.

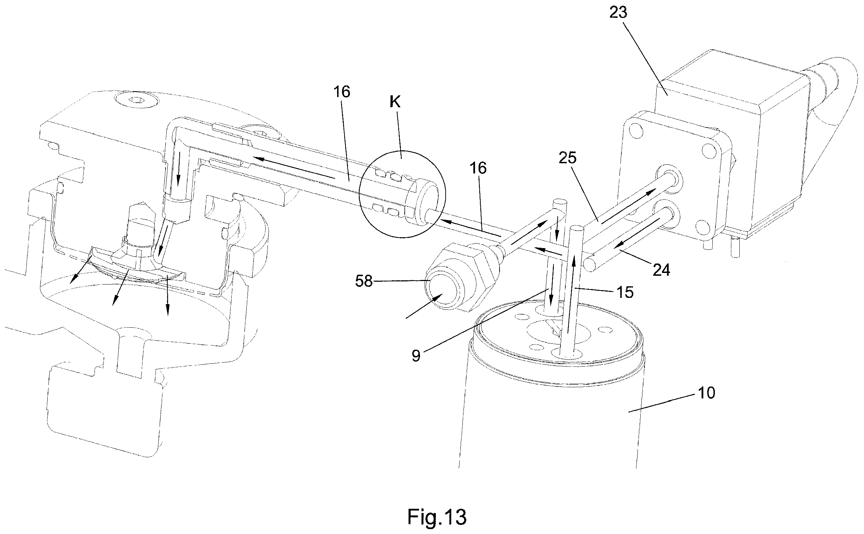

The cartridge **10**, besides the aforementioned first duct **9** for the inflow of the dispensing water **Y**, is provided with a second duct **15** for the outflow of the dispensing water towards the solenoid valve **23** (see fig. 13).

The dispensing water flowing out from the second duct **15** is conveyed towards the solenoid valve **23** through a third supply duct **25**, visible in figs. 4 and 13.

The operation of the second dispensing circuit will be illustrated further in detail hereinafter.

To the dispensing unit **1** there is also associated an outer pump (not visible in the figure), of the per se known type, which serves to maintain the water **Y** pumped in the dispensing circuit at a pressure value comprised between 9 and 15 bars.

As concerns the filter holder unit **3**, as observable in fig. 2, it comprises a diffuser **30**, placed in communication with the third supply duct **16**, and an underlying filter holder container **31**, suitable to be filled with the desired coffee powder blend.

Underlying the filter holder **31** there is present an element **32** for supporting the filter holder container **31** itself, to which there is laterally connected a gripping element **33** to be grasped by the user.

After mixing with the water **Y** of the dispensing circuit, the coffee beverage flows out through an outlet **34**.

Still with reference to fig. 2, the dispensing unit **1** is insulated, at the upper part, with respect to the external environment by means of a cover **21** that is internally provided with a plurality of air interspaces **22** suitably spaced from each other.

Advantageously, such air interspaces **22** insulate the upper surfaces of the filter holder unit **3** from the external environment and thus enable considerable energy saving in terms of lesser amount of kW absorbed by the dispensing unit **1**.

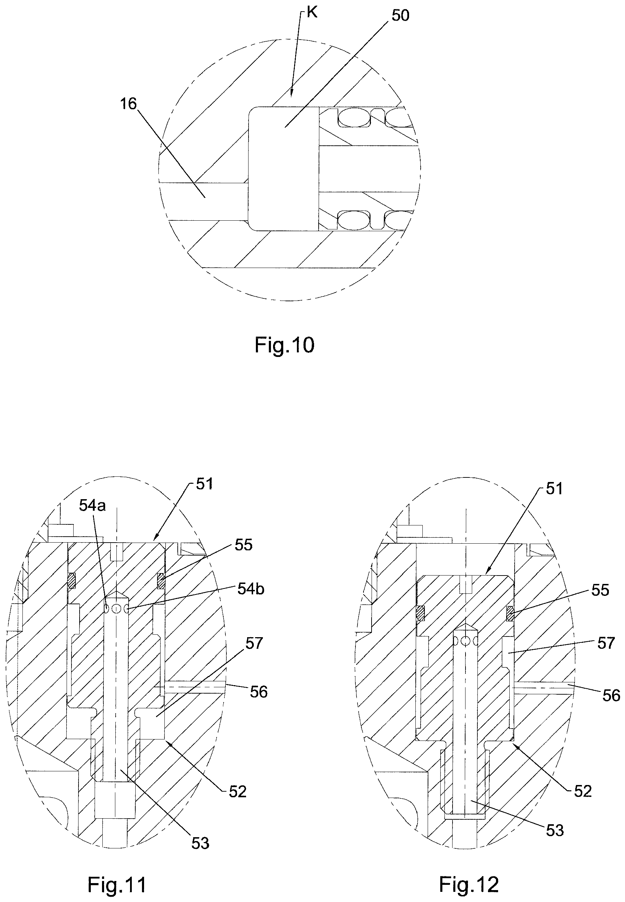

With reference to fig. 10, in communication with the second outlet duct **15** of the dispensing circuit there is present a pre-infusion chamber **50**.

According to a preferred embodiment, the pre-infusion chamber **50**, in combination with a second insert **51** contained therein, has the function of improving the mixing of water and air during the dispensing of the coffee beverage, thus generating foam.

Preferably but not necessarily, the second insert **51**, illustrated in figs. 11 and 12, is housed in the pre-infusion chamber **50**, at the area **K** shown in fig. 2.

The insert **51** is threaded and the thread thereof can be conjugated with that of a partly threaded seat **52**, obtained in the main body **2** of the dispensing unit **1**. Thus, the second insert **51** can be inserted by screwing in the aforementioned seat **52**.

As observable in figs. 11 and 12, the second insert **51** is in communication with the outlet of the third supply duct **16** of the dispensing circuit through a first channel **53** which extends inside the insert **51**. However, according to a variant embodiment not represented in the figures, the second insert **51** may be positioned differently.

At the upper end of the first channel **53** there are two holes, respectively **54a** and **54b**, spaced from each other.

Still with reference to figs. 11 and 12, the insert **51** is sealingly inserted into the seat **52** by means of an O-ring **55** and it can be manually screwed/unscrewed in such seat **52** by the user.

The presence of the insert **51** advantageously enables the user to regulate the amount of foam present in the dispensed coffee, as explained further in detail hereinafter.

Operatively and with reference to all the figures, the dispensing unit **1** operates as follows.

In order to maintain the filter holder unit **3** at the required temperature, the boiler **4** is already provided filled with the fluid **X**.

The water/fluid **X** of the thermosyphon circuit is then heated by the resistor **5** and, by heating, it rises by convection through the calibrated hole **41** until it enters into the first thermosyphon duct **7** (see fig. 5) along the annular thermosyphon circuit **70**.

In the annular circuit **70** the water **X** returns colder through the second thermosyphon duct **8** (see fig. 6) before returning to the boiler **4** and being heated again by means of the resistor **5**.

As regards the operation of the cartridge **10** submerged in the boiler **4**, the water **Y** of the dispensing circuit is drawn from the water supply system and it is conveyed towards the cartridge **10** through the inlet duct **9** (see fig. 7).

As observable in fig. 7, the first inlet duct **9** has a first substantially vertical portion **9a** and a second portion **9b** substantially orthogonal to the first portion **9a**.

Advantageously, such configuration enables the water **Y**, which flows into the first inlet duct **9** of the dispensing circuit, to change the flow thereof from laminar to turbulent at the elbow portion **90** of the first inlet duct **9**.

Thus, the water that passes through the helical channel **12** of the cartridge **10**, having taken a turbulent flow, considerably increases the heat exchange surface of the water **Y** and this enables the temperature increase of the dispensing water **Y**.

The dispensing water **Y** thus heated flows out from the second duct **15** of the dispensing circuit and reacquires a substantially laminar flow at the elbow portion **150** of the second outlet duct **15** of the dispensing circuit.

As observable still in fig. 7, the second outlet duct **15** has a configuration similar to that of the first inlet duct **9**, and thus it has a first substantially vertical portion **15a** and a second portion **9b** substantially orthogonal to the first portion **9a**.

After flowing out from the second duct **15**, the heated water **Y** is conveyed to the solenoid valve **23** which, once activated, enables the water **Y** coming from the water supply system and heated in the cartridge **10** to flow towards the duct **16** and thus towards the filter holder unit **3** to be mixed with the coffee and be dispensed into a cup (not visible in the figures).

Should the second insert **51** be present in the pre-infusion chamber **50**, when the filter holder unit **3** is decoupled, the air which is conveyed through a second channel **56** towards the seat **52** of the insert **51** flows in from the external environment.

In the meanwhile, the dispensing water flowing out from the duct **24** flows into the first channel **53** inside the insert **51** and it flows out from the two holes **54a** and **54b**, mixing with the external air flowing into the second channel **56**. When the insert **51** is completely screwed into the seat **52** (see fig. 12), the air chamber **57** that is created in the seat **52** reaches the minimum volume thereof and thus there is a minimum air volume which leads to an equally minimum creation of foam in the coffee cup.

Vice versa, as observable in fig. 11, when the user unscrews the insert **51** from the seat **52** thereof, the air chamber **57** expands reaching the maximum volume thereof. In this case, the amount of air is maximum and thus there will be an amount of maximum foam in the coffee cup.

Thus, this air/water mixing system advantageously enables regulating the amount of foam provided to the coffee dispensed in the cup.

In the light of the above it is observable that the dispensing unit and the coffee machine according to the invention attain the pre-set objects.

In particular, the object of obtaining a constant regulation system of the dispensing temperature due to an optimised heat insulation system with a dispensing temperature error that revealed to be equivalent to ±0.5°C is attained. This result is attained with a drastically reduced power for each dispensing unit; thus, this enables considerable energy saving with respect to coffee machines of the known type.

In addition, the object of overcoming the problem related to the heat inertial of the dispensing unit according to the invention is attained in that now the inflowing water, coming from the water supply system at 15-20°C, is brought to the desired temperature (about 90°C) directly towards the dispensing circuit to dispense coffee into a cup without having to be previously mixed neither with the water of the thermosyphon circuit nor with that of the service boiler. This implies that the dispensing unit according to the invention can dispense coffee into a cup within a shorter period of time than that required with the current systems.

Advantageously, in the dispensing unit according to the invention there is no direct contact between the dispensing water and the heating element of the boiler of the thermosyphon circuit.

Still advantageously, the low operating pressure of the thermosyphon circuit of the dispensing unit according to the invention enables using boilers made of polymeric material supplied with distilled water or other fluids, so as to eliminate the deposit of scale on the heating element.

Still advantageously, the helical channel of the aforementioned cartridge can be dimensioned in a manner such to contain the precise amount of water required to dispense the required espresso coffee.

Still advantageously, the coffee machine according to the invention is provided with one or more dispensing units all independent from each other and all being independent from the thermosyphon circuit of the boiler, this avoiding the need to pre-mix the water coming from the water supply system with the water of the thermosyphon circuit.

Furthermore, the independence of the thermosyphon circuit from the water supply system pressure makes the circulation speed of the thermosyphon circuit water constant, thus obtaining a more homogeneous heating of the dispensing unit in all steps thereof.

Lastly, besides maintaining the dispensing temperature of the coffee beverage over time during the dispensing subsequent to the first one, the dispensing unit according to the invention also enables maintaining the organoleptic properties of the coffee beverage present in the cup unaltered over time.

## Claims

1. Unit (1) for dispensing hot beverages, particularly espresso coffee, comprising:
- a main body (2) provided with at least one coffee filter holder unit (3) removably constrained to said main body (2);
- a boiler (4) mechanically connected to said main body (2) and provided with one or more heating elements (5), inside said boiler (4), for heating the water (X) present in the boiler;
- a first circuit, which extends inside said boiler (4), for heating the water (X) which circulates therein so as to maintain a pre-set operating temperature value for the water (Y) circulating in said filter holder unit (3);
- a second circuit for conveying the dispensing water (Y) towards said filter holder unit (3), said second circuit being connected to said filter holder unit (3) and being independent from said first circuit;
**characterised in that** it comprises a cartridge (10) having an essentially tubular shape, said cartridge (10) belonging to said second circuit and being submerged in the water contained in said boiler (4), in one of the surfaces (13) of said cartridge (10) there being obtained:
- a first hole (14a) for the inflow of the dispensing water (Y) coming from the water supply system;
- a second hole (14b), spaced from said first hole, for the outflow of the dispensing water (Y) towards said filter holder unit (3),
said first and said second hole respectively constituting the beginning and the end of a channel (12) for the passage of the dispensing water (Y), said channel (12) being obtained on the outer section of said cartridge (10) and extending according to a helical path.

2. Dispensing unit (1) according to claim 1, **characterised in that** said channel (12) extends according to a double-helix helical path.

3. Dispensing unit (1) according to claim 2, **characterised in that** in said double-helix helical path two helical paths (121, 122), in which the water which traverses one helix (121) of said helices in one direction flows against the current with respect to the water which traverses the other helix (122) in the opposite direction, are identified.

4. Dispensing unit (1) according to any one of the preceding claims, **characterised in that** said cartridge (10) comprises:
- a first inner component (11a) obtained using a material with good heat conductivity;
- a second component (11b), outer with respect to said first component (11a) and having a heat conductivity which is lower than that of said first component (11a), said second component (11b) being configured to be sealingly splined on said first component (11a) so as to obtain a watertight helical duct.

5. Dispensing unit (1) according to claim 4, **characterised in that** said second component (11b) is a jacket made of stainless steel, while said first component (11a) is made of a copper alloy suitable for food production industry.

6. Dispensing unit (1) according to any one of the preceding claims, **characterised in that** said second dispensing circuit comprises:
- a first duct (9) for the inflow of the dispensing water (Y) coming from the water supply system towards said cartridge (10);
- a second duct (15) for the outflow of the dispensing water from said cartridge (10) towards said filter holder unit (3).

7. Dispensing unit (1) according to claim 6, **characterised in that** said first (9) and said second (15) ducts are configured so as to comprise a first part (9a, 15a) and a second part (9b, 15b) joined to said first part (9a, 15a) and substantially orthogonal thereto, said configuration being such to allow the dispensing water (Y) which flows in said ducts (9, 15) to pass from a laminar flow to a turbulent flow, and vice versa.

8. Dispensing unit (1) according to any one of the preceding claims, **characterised in that** it comprises, above said cartridge (10), a first insert (40) in which a calibrated hole (41) is obtained, said calibrated hole (41) being adapted to allow the triggering of the circulation of water (X) in said first circuit.

9. Dispensing unit (1) according to any one of the preceding claims, **characterised in that** it further comprises a second insert (51) connected to said second duct (15) for the outflow of the dispensing water (Y) and in communication with said filter holder unit (3) through a third supply duct (16), said second insert (51) being inserted into a seat (52) and being configured to regulate the air/water mixture contained in the coffee beverage through the screwing/unscrewing thereof in said seat (52).

10. Dispensing unit (1) according to claim 9, **characterised in that** said second insert (51) is partly threaded and the thread thereof has a section that can be joined with the section of the thread of said seat (52).

11. Dispensing unit (1) according to any one of the preceding claims, **characterised in that** said first circuit is a thermosyphon circuit.

12. Coffee machine comprising one or more dispensing units (1), **characterised in that** each one of said dispensing units (1) is made according to any one of the preceding claims.

## Patentansprüche

1. Einheit (1) zur Ausgabe von heißen Getränken, insbesondere Espresso-Kaffee, umfassend:
- einen Hauptkörper (2), der mit zumindest einer Kaffeefilter-Haltereinheit (3) versehen ist, die lösbar am besagten Hauptkörper (2) befestigt ist;
- einen Kessel (4), der mechanisch mit dem besagten Hauptkörper (2) verbunden ist und mit einem oder mehreren innerhalb des besagten Kessels (4) befindlichen Heizelementen (5) zum Aufheizen des im Kessel enthaltenen Wassers (X) versehen ist;
- einen ersten Kreislauf, der sich innerhalb des besagten Kessels (4) zum Aufheizen des darin umlaufenden Wassers (X) erstreckt, um einen vorgegebenen Betriebstemperaturwert für das in der besagten Filterhaltereinheit (3) umlaufende Wasser (Y) aufrecht zu erhalten;
- einen zweiten Kreislauf zum Fördern des Ausgabewassers (Y) in die besagte Filterhaltereinheit (3), wobei der besagte zweite Kreislauf mit der besagten Filterhaltereinheit (3) verbunden und unabhängig vom besagten ersten Kreislauf ist;
**dadurch gekennzeichnet, dass** sie eine im Wesentlichen schlauchförmig ausgebildete Kartusche (10) umfasst, wobei die besagte zum zweiten Kreislauf gehörende Kartusche (10) in das im besagten Kessel (4) enthaltene Wasser getaucht ist und auf eine der Oberflächen (13) der besagten Kartusche (10) Folgendes erhalten wird:
- eine erste Öffnung (14a) für das Einströmen des aus dem Wasserversorgungssystem kommenden Ausgabewassers (Y);
- eine von der besagten ersten Öffnung beabstandete zweite Öffnung (14b) für das Ausströmen des Ausgabewassers (Y) in die besagte Filterhaltereinheit (3),
die besagte erste und die besagte zweite Öffnung jeweils den Anfang und das Ende eines Kanals (12) für den Durchgang des Ausgabewassers (Y) bilden, wobei der besagte Kanal (12) am Außenteil der besagten Kartusche (10) vorgesehen ist und sich entlang eines spiralförmigen Verlaufs erstreckt.

2. Ausgabeeinheit (1) nach Anspruch 1, **dadurch gekennzeichnet, dass** der besagte Kanal (12) sich entlang eines doppelspiralförmigen Verlaufs erstreckt.

3. Ausgabeeinheit (1) nach Anspruch 2, **dadurch gekennzeichnet, dass** der besagte doppelspiralförmige Verlauf zwei spiralförmige Verläufe (121, 122) aufweist, in denen das eine Spirale (121) der besagten Spiralen in eine Richtung durchlaufende Wasser gegen den Strom des Wassers fließt, das die andere Spirale (122) in umgekehrter Richtung durchläuft.

4. Ausgabeeinheit (1) nach irgendeinem der vorgehenden Ansprüche, **dadurch gekennzeichnet, dass** die besagte Kartusche (10) Folgendes umfasst:
- eine erste, aus einem Material mit guter Wärmeleitfähigkeit gefertigte Innenkomponente (11a);
- eine zweite, in Bezug auf die besagte erste Komponente (11a) äußere Komponente (11b), die eine Wärmeleitfähigkeit aufweist, die niedriger als die der besagten ersten Komponente (11a) ist, wobei die besagte zweite Komponente (11b) dazu ausgebildet ist dicht auf der besagten ersten Komponente (11a) gepresst zu werden, um somit eine wasserdichte spiralförmige Leitung zu erhalten.

5. Ausgabeeinheit (1) nach Anspruch 4, **dadurch gekennzeichnet, dass** die besagte zweite Komponente (11b) ein aus Edelstahl gefertigter Mantel ist, während die besagte erste Komponente (11a) aus einer für die Lebensmittelindustrie geeigneten Kupferlegierung hergestellt ist.

6. Ausgabeeinheit (1) nach irgendeinem der vorgehenden Ansprüche, **dadurch gekennzeichnet, dass** der besagte zweite Ausgabekreislauf Folgendes umfasst:
- eine erste Leitung (9) für das Einströmen des aus dem Wasserversorgungssystem kommenden Ausgabewassers (Y) in Richtung der besagten Kartusche (10);
- eine zweite Leitung (15) für das Ausströmen des Ausgabewassers aus der besagten Kartusche (10) in Richtung der besagten Filterhaltereinheit (3).

7. Ausgabeeinheit (1) nach Anspruch 6, **dadurch gekennzeichnet, dass** die besagte erste (9) und die besagte zweite (15) Leitung so ausgebildet sind, dass sie einen ersten Teil (9a, 15a) und einen zweiten, mit dem besagten ersten Teil (9a, 15a) verbundenen und hierzu im Wesentlichen orthogonalen Teil (9b, 15b) umfassen, wobei die besagte Konfigurierung so ausgestaltet ist, dass das in den besagten Leitungen (9, 15) fließende Ausgabewasser (Y) von einer laminaren Strömung in eine turbulente Strömung übergehen kann, und umgekehrt.

8. Ausgabeeinheit (1) nach irgendeinem der vorgehenden Ansprüche, **dadurch gekennzeichnet, dass** sie, über die besagte Kartusche (10), einen ersten Einsatz (40) umfasst, in welchem eine kalibrierte Öffnung (41) bereitgestellt ist; die besagte kalibrierte Öffnung (41) dazu ausgelegt ist das Auslösen der Wasserzirkulation (X) im besagten ersten Kreislauf zu erlauben.

9. Ausgabeeinheit (1) nach irgendeinem der vorgehenden Ansprüche, **dadurch gekennzeichnet, dass** sie ferner einen zweiten Einsatz (51) umfasst, der mit der besagten zweiten Leitung (15) für das Ausströmen des Ausgabewassers (Y) verbunden ist und durch eine dritte Zufuhrleitung (16) in Verbindung mit der besagten Filterhaltereinheit (3) steht; der besagte zweite Einsatz (51) in einen Sitz (52) eingeführt und dazu ausgelegt ist das im Kaffeegetränk enthaltene Luft/Wasser-Gemisch durch dessen Ein-/Ausschrauben in den/aus dem besagten Sitz (52) zu regeln.

10. Ausgabeeinheit (1) nach Anspruch 9, **dadurch gekennzeichnet, dass** der besagte zweite Einsatz (51) teilweise mit einem Gewinde versehen ist, und dass dessen Gewinde einen Abschnitt aufweist, der mit dem Abschnitt des Gewindes des besagten Sitzes (52) verbunden werden kann.

11. Ausgabeeinheit (1) nach irgendeinem der vorgehenden Ansprüche, **dadurch gekennzeichnet, dass** der besagte erste Kreislauf ein Thermosiphon-Kreislauf ist.

12. Kaffeemaschine umfassend eine oder mehrere Ausgabeeinheiten (1), **dadurch gekennzeichnet, dass** jede der besagten Ausgabeeinheiten (1) nach einem beliebigen der vorstehenden Patentansprüche hergestellt ist.

## Revendications

1. Unité (1) pour la distribution de boissons chaudes, particulièrement du café espresso, comprenant:
- un corps principal (2) doté d'au moins une unité de support de filtre à café (3) maintenue de manière amovible sur ledit corps principal (2);
- un chauffe-eau (4) relié de façon mécanique audit corps principal (2) et doté d'un ou de plusieurs éléments chauffants (5) à l'intérieur dudit chauffe-eau (4), pour le chauffage de l'eau (X) contenue dans le chauffe-eau;
- un premier circuit, qui s'étend à l'intérieur dudit chauffe-eau (4), pour le chauffage de l'eau (X) qui y circule, de sorte à maintenir une valeur préréglée de température de fonctionnement pour l'eau (Y) circulant dans ladite unité de support de filtre (3);
- un second circuit pour acheminer l'eau de distribution (Y) vers ladite unité de support de filtre (3), ledit second circuit étant connecté à ladite unité de support de filtre (3) et étant indépendant dudit premier circuit;
**caractérisée en ce qu'**elle comprend une cartouche (10) présentant une forme essentiellement tubulaire, ladite cartouche (10) appartenant audit second circuit et étant submergée dans l'eau contenue dans ledit chauffe-eau (4), dans l'une des surfaces (13) de ladite cartouche (10) en obtenant:
- un premier trou (14a) pour l'arrivée d'eau de distribution (Y) provenant du système d'alimentation en eau;
- un second trou (14b), distant par rapport audit premier trou, pour l'écoulement de l'eau de distribution (Y) vers ladite unité de support de filtre (3),
ledit premier et ledit second trou constituant respectivement le début et la fin d'un canal (12) pour le passage de l'eau de distribution (Y), ledit canal (12) étant obtenu sur la section extérieure de ladite cartouche (10) et s'étendant selon une voie hélicoïdale.

2. Unité de distribution (1) selon la revendication 1, **caractérisée en ce que** ledit canal (12) s'étend selon une voie hélicoïdale à double hélice.

3. Unité de distribution (1) selon la revendication 2, **caractérisée en ce que** dans ladite voie hélicoïdale à double hélice, deux voies hélicoïdales (121, 122) sont identifiées, dans lesquelles l'eau qui traverse une hélice (121) desdites hélices dans une direction s'écoule à contre-courant par rapport à l'eau qui traverse l'autre hélice (122) dans la direction opposée.

4. Unité de distribution (1) selon l'une quelconque des revendications précédentes, **caractérisée en ce que** ladite cartouche (10) comprend:
- un premier composant interne (11a) obtenu en utilisant un matériau ayant une bonne conductivité thermique;
- un second composant (11b), externe par rapport audit premier composant (11a) et ayant une conductivité thermique inférieure à celle dudit premier composant (11a), ledit second composant (11b) étant configuré pour être cannelé de manière étanche sur ledit premier composant (11a) de sorte à obtenir un conduit hélicoïdal étanche.

5. Unité de distribution (1) selon la revendication 4, **caractérisée en ce que** ledit second composant (11b) est une enveloppe en acier inoxydable, tandis que ledit premier composant (11a) est un alliage de cuivre recommandé dans la production alimentaire.

6. Unité de distribution (1) selon l'une quelconque des revendications précédentes, **caractérisée en ce que** ledit second circuit de distribution comprend:
- un premier conduit (9) pour l'arrivée de l'eau de distribution (Y) provenant du système d'alimentation en eau vers ladite cartouche (10);
- un second conduit (15) pour l'écoulement de l'eau de distribution provenant de ladite cartouche (10) vers ladite unité de support de filtre (3).

7. Unité de distribution (1) selon la revendication 6, **caractérisée en ce que** ledit premier (9) et ledit second (15) conduits sont configurés de sorte à comporter une première partie (9a, 15a) et une seconde partie (9b, 15b) reliée à ladite première partie (9a, 15a) et sensiblement orthogonale à celle-ci, ladite configuration permettant à l'eau de distribution (Y) qui s'écoule dans lesdits conduits (9, 15) de passer d'un écoulement laminaire à un écoulement turbulent, et vice versa.

8. Unité de distribution (1) selon l'une quelconque des revendications précédentes, **caractérisée en ce qu'**elle comprend, au-dessus de ladite cartouche (10), un premier insert (40) dans lequel un trou calibré (41) est obtenu, ledit trou calibré (41) étant adapté pour permettre le déclenchement de la circulation d'eau (X) dans ledit premier circuit.

9. Unité de distribution (1) selon l'une quelconque des revendications précédentes, **caractérisée en ce qu'**elle comprend en outre un second insert (51) raccordé audit second conduit (15) pour l'écoulement de l'eau de distribution (Y) et communiquant avec ladite unité de support de filtre (3) par l'intermédiaire d'un troisième conduit d'alimentation (16), ledit second insert (51) étant inséré dans un siège (52) et configuré pour réguler le mélange air/eau contenu dans la boisson à base de café par vissage/dévissage dans ledit siège (52).

10. Unité de distribution (1) selon la revendication 9, **caractérisée en ce que** ledit second insert (51) est partiellement fileté et son filetage présente une section pouvant être reliée à la section du filetage dudit siège (52).

11. Unité de distribution (1) selon l'une quelconque des revendications précédentes, **caractérisée en ce que** ledit premier circuit est un circuit à thermosiphon.

12. Machine à café comprenant une ou plusieurs unités de distribution (1), **caractérisée en ce que** chacune desdites unités de distribution (1) est fabriquée selon l'une quelconque des revendications précédentes.
